(19) **Europäisches Patentamt**

**European Patent Office**

**Office européen des brevets**

(11) **EP 1 677 180 A1**

(12) **EUROPÄISCHE PATENTANMELDUNG**

| | |
|---|---|
| (43) Veröffentlichungstag:<br>**05.07.2006 Patentblatt 2006/27** | (51) Int Cl.:<br>***G06F 3/038*** *(2006.01)* |

(21) Anmeldenummer: **05025836.7**

(22) Anmeldetag: **26.11.2005**

| | |
|---|---|
| (84) Benannte Vertragsstaaten:<br>**AT BE BG CH CY CZ DE DK EE ES FI FR GB GR HU IE IS IT LI LT LU LV MC NL PL PT RO SE SI SK TR**<br>Benannte Erstreckungsstaaten:<br>**AL BA HR MK YU** | • **AUDI AKTIENGESELLSCHAFT**<br>**85045 Ingolstadt (DE)**<br><br>(72) Erfinder:<br>• **Prados, Michael**<br>**94304 Palo Alto (US)**<br>• **Alessandrini, Philippe**<br>**94301 Palo Alto**<br>**CA (US)**<br>• **Bloehs, Wolfgang**<br>**85049 Ingolstadt (DE)** |
| (30) Priorität: **30.12.2004 US 640360 P** | |
| (71) Anmelder:<br>• **Volkswagen Aktiengesellschaft**<br>**38436 Wolfsburg (DE)** | |

(54) **Berührungsempfindlicher Bilschirm der zwei gleichzeitige Berührungspunkte erkennt**

(57)    Die Erfindung betrifft eine Eingabevorrichtung (4,8,10), insbesondere eine Eingabevorrichtung (4,8,10) für ein Kraftfahrzeug, wobei die Eingabevorrichtung (4,8,10) ein Display (17) zur optischen Darstellung von Informationen, einen über dem Display (17) angeordneten Touchscreen (16) zur Eingabe von Befehlen durch Berühren einer Bedienfläche (16A) des Touchscreens und eine Steuerung zur optischen Darstellung von weiteren oder anderen Informationen auf dem Display (17) bei zumindest einer zweiten gleichzeitig erfolgenden Berührung der Bedienfläche (16A) umfasst.

FIG. 7

EP 1 677 180 A1

**Beschreibung**

Die Erfindung betrifft eine Eingabevorrichtung mit einem Touchscreen, insbesondere eine Eingabevorrichtung für ein Kraftfahrzeug.

Ein Touchscreen ist z.B. aus dem deutschen Gebrauchsmuster DE 201 02 197 U1 bekannt. In der DE 201 02 197 U1 ist ein Touchscreen zur Visualisierung von elektronischen Signalen und einer bestätigenden Berührungseingabe von Zeichen und Symbolen bestehend aus einer Funktionsebene zur Visualisierung und Tasteingabe und einer hierzu korrespondierenden, höher gelegenen, punktuell deformierbaren Schutzebene offenbart. Dabei wird bei einer Auswahl bestimmter Punkte der Funktionsebene mittels Berührung über die Schutzebene hinweg mindestens ein Bestätigungssignal für den Tastsinn (haptischer Reiz) des Benutzers wahrnehmbar an der Position des Berührungspunktes in der deformierten Schutzebene erzeugt und das Bestätigungssignal für den Tastsinn (haptischer Reiz) durch exzentrisch, inner- und/oder unterhalb der Funktionsebene angeordnete Schwingungselemente erzeugt. Zudem erfolgt bei dem aus der DE 201 02 197 U1 bekannten Touchscreen die Weiterleitung der erzeugten Schwingungen von der Funktions- auf die Schutzebene durch direkten Kontakt der beiden Ebenen und/oder über die Randbereiche der Ebenen durch starre oder elastische Verbindungselemente.

Einzelheiten zu Touchscreens können z.B. der Internetseite www.3m.com/3mtouchsystems/ entnommen werden. Es werden z.B. folgende Touchscreens von 3M™ angeboten:

- MicroTouch™ 12.1" FPD Touch Monitor (vgl. www.3m.com/3mtouchsystems/Products/Monitors/FPDdesktop.html).
- MicroTouch™ M150 FPD Touch Monitor (vgl. www.3m.com/3mtouchsystems/Products/Monitors/M150.jhtml)
- MicroTouch™ CRT Touch Monitor (vgl. www.3m.com/3mtouchsystems/Products/Monitors/CRTdesktop.jhtml)
- MicroTouch™ ChassisTouch™ FPD Touch Monitor (vgl. www.3m.com/3mtouchsystems/Products/Monitors/FPDchassis.jhtml)
- MicroTouch™ ChassisTouch™ CRT Touch Monitor (vgl. www.3m.com/3mtouchsystems/Products/Monitors/CRTchassis.jhtml)

Weitere Einzelheiten zu Touchscreens können auch den folgenden Internetseiten entnommen werden:

- www.elotouch.com/products/default.asp
- www.3m.com/3mtouchsystems/Products/Resistive/5-wire.jhtml
- www.3m.com/3mtouchsystems/Products/Resistive/PL.jhtml
- www.3m.com/3mtouchsystems/Products/Resistive/FG.jhtml
- www.3m.com/3mtouchsystems/Products/Resistive/SRTS.jhtml

Aus dem deutschen Gebrauchsmuster DE 201 80 024 U1 bzw. der korrespondierenden WO 01/54109 A1 ist zur haptischen Rückkopplung zudem eine Berührungssteuerung mit haptischer Rückkopplung zur Eingabe von Signalen in einen Computer und zur Ausgabe von Kräften an einen Benutzer der Berührungssteuerung bekannt, wobei die Berührungssteuerung ein Berührungseingabegerät aufweist, das eine annähernd ebene Berührungsoberfläche aufweist, die derart betrieben wird, dass sie aufgrund einer Position auf der Berührungsoberfläche, die ein Benutzer berührt, ein Positionssignal in einen Prozessor des Computers eingibt, wobei das Positionssignal die Position in zwei Dimensionen wiedergibt. Die Berührungssteuerung gemäß der WO 01/54109 A1 weist zudem mindestens einen mit dem Berührungseingabegerät verbundenen Aktor auf, wobei der Aktor eine Kraft auf das Berührungseingabegerät ausgibt, um dem die Berührungsoberfläche berührenden Benutzer eine haptische Empfindung zu liefern, wobei der Aktor die Kraft aufgrund einer von dem Prozessor ausgegebenen Kraftinformation direkt auf das Berührungseingabegerät ausgibt.

Haptische Rückkopplung ist zudem aus der US 6 429 846, der WO 03/038800 A1 und der WO 03/41046 A1 bekannt.

Aus der deutschen Offenlegungsschrift DE 197 31 285 A1 ist ein Bedienelement für eine Einrichtung mit mehreren wählbaren Menüs, Funktionen und/oder Funktionswerten bekannt, das eine Oberfläche besitzt, die durch den Bediener erfassbar ist und über die die Auswahl durch eine lokale Bewegung bzw. Berührung der Oberfläche vernehmbar ist. Die Oberfläche ist in ihrer Gestalt entsprechend dem/der gewählten und/oder auswählbaren Menüs, Funktion und/oder Funktionswert veränderbar.

Es ist Aufgabe der Erfindung, eine Eingabevorrichtung mit einem Touchscreen zu verbessern. Es ist wünschenswert, eine besonders gut für Kraftfahrzeuge geeignete Eingabevorrichtung zu schaffen.

Vorgenannte Aufgabe wird durch eine Eingabevorrichtung, insbesondere durch eine Eingabevorrichtung für ein Kraftfahrzeug, mit einem Display zur optischen Darstellung von Informationen, einem über dem Display angeordneten Touchscreen zur Eingabe von Befehlen durch Berühren einer Bedienfläche des Touchscreens und einer Steuerung zur optischen Darstellung von weiteren oder anderen Informationen auf dem Display bei zumindest einer zweiten gleichzeitig erfolgenden Berührung der Bedienfläche gelöst. Eine Berührung der Bedienfläche des Touchscreens im Sinne der Ansprüche kann dabei eine leichte Berührung der Bedienfläche und/oder ein Drücken auf die Bedienfläche umfassen. Eine gleichzeitig erfolgende Berührung der Bedienfläche im Sinne der Erfindung soll bedeuten, dass es zumindest einen Zeitpunkt oder ein Zeitintervall gibt, an dem bzw. in dem die erste und die zweite Berührung der Bedienfläche gleichzeitig erfolgen. Ein Zeitintervall, in dem die erste Berührung der Bedienfläche erfolgt, muss nicht identisch mit einem Zeitintervall sein, in dem die zweite Berührung der Bedienfläche erfolgt.

In einer Ausgestaltung der Erfindung sind besagte weitere oder andere Informationen mittels der Steuerung nur dann auf dem Display anzeigbar, wenn die erste Berührung der Bedienfläche vor der zweiten Berührung der Bedienfläche beginnt.

In einer Ausgestaltung der Erfindung sind besagte weitere oder andere Informationen mittels der Steuerung nur dann auf dem Display anzeigbar, wenn die zweite Berührung der Bedienfläche vor der ersten Berührung der Bedienfläche endet.

In einer weiteren Ausgestaltung der Erfindung sind die besagten weiteren oder anderen Informationen mittels der Steuerung nur dann auf dem Display anzeigbar, wenn die zweite gleichzeitig erfolgende Berührung der Bedienfläche weniger als einen oberen Zeitgrenzwert andauert.

In einer weiteren Ausgestaltung der Erfindung ist der obere Zeitgrenzwert kleiner oder gleich 1s, insbesondere kleiner oder gleich 0,5s.

In einer weiteren Ausgestaltung der Erfindung umfasst die Eingabevorrichtung weiterhin einen Aktor zum Bewegen des Touchscreens.

In einer weiteren Ausgestaltung der Erfindung ist der Aktor mittels der Steuerung derart ansteuerbar, dass der Touchscreen zur Bestätigung einer Anzeige besagter weiterer oder anderer Informationen bewegt wird.

Weitere Vorteile und Einzelheiten ergeben sich aus der nachfolgenden Beschreibung von Ausführungsbeispielen.

Fig. 1 zeigt ein Ausführungsbeispiel für ein Cockpit eines Kraftfahrzeuges;
Fig. 2 zeigt ein weiteres Ausführungsbeispiel für ein Cockpit eines Kraftfahrzeuges;
Fig. 3 zeigt eine Eingabevorrichtung;
Fig. 4 zeigt einen Querschnitt der Eingabevorrichtung entlang der Schnittlinie A-A gemäß Fig. 3;
Fig. 5 zeigt einen in einer Steuerung implementierten Ablaufplan;
Fig. 6 zeigt ein Ausführungsbeispiel für eine mittels einer Eingabevorrichtung dargestellte Grundmaske;
Fig. 7 zeigt die in Fig. 6 dargestellte Grundmaske mit einem Zusatzmenü;
Fig. 8 zeigt ein Ausführungsbeispiel für eine Maske zur Bedienung einer Klimaanlage;
Fig. 9 zeigt die in Fig. 8 dargestellte Maske mit einem Zusatzmenü;
Fig. 10 zeigt ein Ausführungsbeispiel für eine Maske zur Bedienung eines Navigationssystems;
Fig. 11 zeigt die in Fig. 10 dargestellte Maske mit einem Zusatzmenü;
Fig. 12 zeigt ein Ausführungsbeispiel für eine Untermaske zur Bedienung eines Navigationssystems;
Fig. 13 zeigt die in Fig. 12 dargestellte Untermaske mit einem Zusatzmenü;
Fig. 14 zeigt ein Ausführungsbeispiel für eine weitere Untermaske zur Bedienung eines Navigationssystems;
Fig. 15 zeigt die in Fig. 14 dargestellte Untermaske mit einem Zusatzmenü;
Fig. 16 zeigt ein Ausführungsbeispiel für eine Maske zur Bedienung eines Telefons; und .
Fig. 17 zeigt die in Fig. 16 dargestellte Maske mit einem Zusatzmenü;

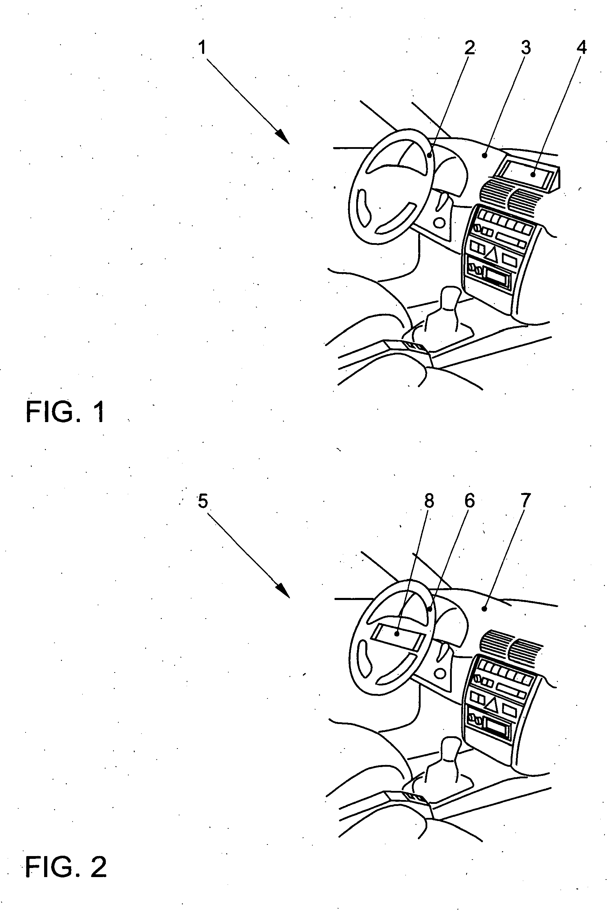

Fig. 1 zeigt ein Ausführungsbeispiel für ein Cockpit 1 eines Kraftfahrzeuges. In dem Cockpit 1 ist unterhalb eines Armaturenbretts 3 ein Lenkrad 2 angeordnet. Das Armaturenbrett 3 weist eine neben dem Lenkrad 2 angeordnete Eingabevorrichtung 4 auf. Fig. 2 zeigt ein alternatives Ausführungsbeispiel für ein Cockpit 5 eines Kraftfahrzeuges, wobei in dem Cockpit 5 ebenfalls unterhalb eines Armaturenbretts 7 ein Lenkrad 6 angeordnet ist. In dem Lenkrad 6 ist jedoch abweichend von dem Ausführungsbeispiel gemäß Fig. 1 eine Eingabevorrichtung 8 angeordnet.

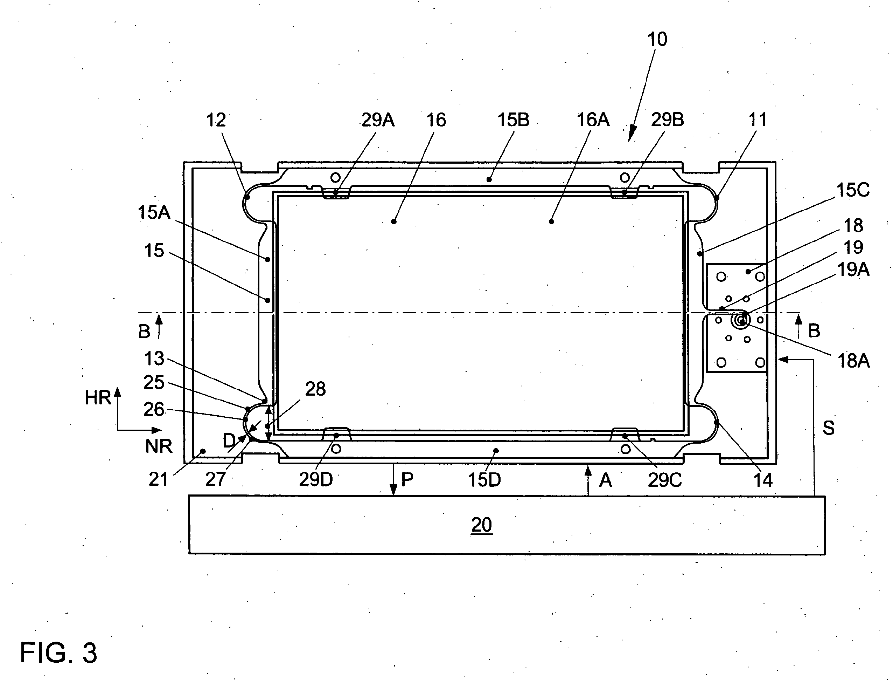

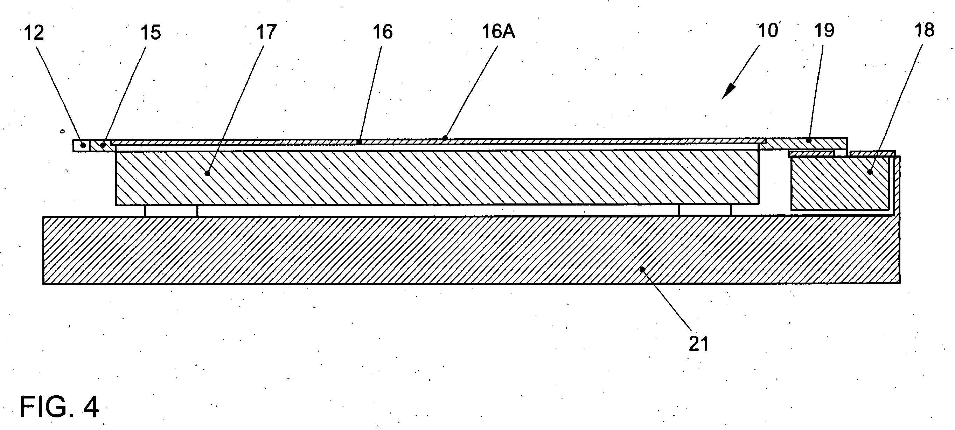

Fig. 3 zeigt - als mögliches Ausführungsbeispiel einer Eingabevorrichtung 4 oder 8 - eine Eingabevorrichtung 10 zur optischen Darstellung von Informationen und zur Eingabe von Befehlen in einer Draufsicht. Fig. 4 zeigt einen Querschnitt der Eingabevorrichtung 10 entlang der Schnittlinie A-A gemäß Fig. 3. Die Eingabevorrichtung 10 weist einen über einem Display 17 angeordneten transparenten Touchscreen 16 mit einer Bedienfläche 16A auf. Das Display 17 ist mittels Halterungen 29A, 29B, 29C und 29D mit einem Referenzkörper 21 verbunden. Der Referenzkörper 21 kann Teil des Armaturenbretts 3 oder des Lenkrades 6 sein.

Der Touchscreen 16 kann in vorteilhafter Ausgestaltung einen nicht dargestellten Kraftsensor (oder äquivalenten Sensor) umfassen, mittels dessen ein von einem Bediener ausgeübter Druck auf den Touchscreen 16 ermittelbar ist. Auf diese Weise kann mittels des Touchscreens 16 eine Berührung des Touchscreen 16 durch einen Bediener von einer bewussten Bedienung durch Drücken auf den Touchscreen 16 unterschieden werden. So führt in diesem Falle ein Drücken auf den Touchscreen 16 an einer als Bedienelement angezeigten Stelle zu einer Bedienung des Touchscreens 16 nicht jedoch eine einfache Berührung des Touchscreen 1.6 durch einen Bediener an einer als Bedienelement angezeigten Stelle. Eine derartige Ausgestaltung ist für den Einsatz in Kraftfahrzeugen vorteilhaft.

Der Touchscreen 16 wird mittels eines Rahmens 15 gehalten. Der Rahmen 15 weist vier U-förmige Federn 11, 12, 13, 14 auf, die mittels Verbindungselementen 15A, 15B, 15C und 15D mit einander verbunden sind. Der Rahmen 15 ist ein Gussteil aus Kunststoff, d.h., die U-förmigen Federn 11, 12, 13, 14 sind zusammen mit den Verbindungselementen 15A, 15B, 15C und 15D aus einem Stück aus Kunststoff gegossen. Ein solcher Kunststoff kann insbesondere Polycarbonat (engl.: polycarbonate), ABS, Acetal (engl.: acetal) oder Polyethylen (engl.: polyethylene) umfassen. Besonders geeignete U-förmige Federn sind aus Acetal herstellbar.

Der Rahmen ist an den Verbindungselementen 15A und 15C mit dem Touchscreen 16 verklebt. In alternativer oder zusätzlicher Ausgestaltung wird der Touchscreen 16 durch eine Vorspannung der U-förmigen Federn 11, 12, 13, 14 in dem Rahmen gehalten..

Der Rahmen 15 weist ein (flexibles) Verbindungsstück 19 auf, dass mit dem Verbindungselement 15C verbunden ist. Das Verbindungsstück 19 weist eine Verkrümmung 19A auf, die einen exzentrischen Antriebswellenzapfen 18A eines als Elektromotor ausgebildeten Aktors 18 umfasst. Die rotatorische Bewegung des Aktors 18 wird in eine translatorische Bewegung umgewandelt. Der Aktor 18 ist als Gleichstrom(bürsten)motor ausgestaltet. Es sind aber auch andere Ausgestaltungen in Verbindung mit einer anderen Verbindung mit dem Rahmen 15, wie z.B. Piezoaktoren oder so genannte Voicecoils, einsetzbar.

Die U-förmigen Federn 11, 12, 13, 14 weisen je zwei Federarme 25 und 27, eine zwischen den beiden Federarmen 25 und 27 angeordnete Öffnung 28 und einen Verbindungspunkt 26 auf, an dem die beiden Federarme 25 und 27 verbunden sind. Die U-förmigen Federn 11, 12, 13, 14 weisen im wesentlichen parallel zur Öffnung 28 eine Hauptfederkonstante und im wesentlichen senkrecht zur Öffnung 28 eine Nebenfederkonstante auf, wobei die Nebenfederkonstante zumindest das Vierfache der Hauptfederkonstante beträgt. Im vorliegenden Ausführungsbeispiel bezieht sich die Hauptfederkonstante auf eine in Fig. 3 als Hauptrichtung HR bezeichnete Richtung und Nebenfederkonstante auf eine in Fig. 3 als Nebenrichtung NR bezeichnete Richtung. Die Hauptrichtung HR und die Nebenrichtung NR sind orthogonal zueinander aber parallel zur Bedienfläche 16A.

Die U-förmigen Federn 11, 12, 13, 14 weisen eine Dicke D von 0,5mm bis 2mm, im vorliegenden Ausführungsbeispiel von 0,8mm, auf. Die Weite der Öffnung 28 beträgt zwischen 5mm und 30mm. Die konkrete Weite der Öffnung 28 wird materialabhängig derart gewählt, dass eine gewünschte Hauptfederkonstante erzielt wird. Die Hauptfederkonstante wird dabei derart auf eine Masse des Touchscreens 16 abgestimmt, dass der Touchscreen 16 in Verbindung mit den U-förmigen Federn 11, 12, 13, 14 eine mechanische Eigenfrequenz von 5Hz bis 150Hz, insbesondere eine Eigenfrequenz von 30Hz bis 75Hz, aufweist. Im vorliegenden Ausführungsbeispiel ist vorgesehen, dass die Eigenfrequenz 55Hz beträgt. Eigenfrequenz im Sinne der Erfindung ist dabei insbesondere die kleinste mechanische Resonanzfrequenz des Systems aus den U-förmigen Federn 11, 12, 13, 14 und dem Touchscreen 16.

Der Begriff U-förmige Federn in Sinne der Erfindung soll insbesondere weit gefasst verstanden werden. So sollen U-förmige Federn in Sinne der Erfindung insbesondere Federn umfassen, die zwei Federarme aufweisen.

Der Touchscreen 16 und das Display 17 gemäß Fig. 3 und Fig. 4 sind datentechnisch mit einer Steuerung 20 verbunden, von der dem Display 17 ein Signal A mit auf dem Display 17 darzustellenden Informationen übermittelt wird. Von dem Touchscreen 16 erhält die Steuerung 20 ein Signal P, das angibt, wo ein Benutzer des Touchscreens 16 den Touchscreen 16 berührt und/oder — sofern vorgesehen — ob der Benutzer derart auf eine als Eingabeposition gekennzeichnete Position des Touchscreens 16 drückt, dass dies als Eingabe zu verstehen ist. So kann vorgesehen sein, dass eine Eingabe durch einfaches Berühren des Touchscreens 16 erfolgt. Es kann aber auch vorgesehen sein, dass eine Eingabe nicht schon durch einfaches Berühren des Touchscreens 16 sondern durch (leichtes) Drücken auf den Touchscreen 16 erfolgt. Letzteres ist ein für den Einsatz in Kraftfahrzeugen besonders geeignetes Vorgehen.

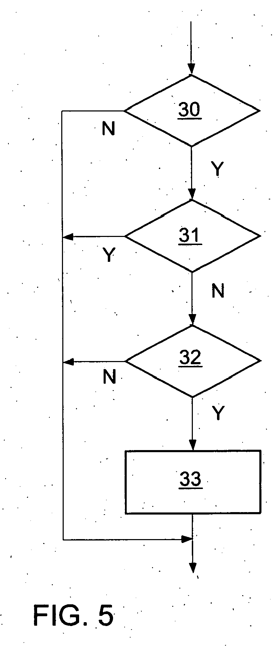

Es ist vorgesehen, dass weitere oder andere Informationen auf dem Display 17 bei einer Berührung der Bedienfläche 16A und zumindest einer zweiten gleichzeitig erfolgenden Berührung der Bedienfläche 16A darstellbar sind. Dazu ist in der Steuerung 20 ein in Fig. 5 in beispielhafter Ausgestaltung dargestellter Ablaufplan implementiert. Der in Fig. 5 in beispielhafter Ausgestaltung dargestellte Ablaufplan beginnt mit einer Abfrage 30, ob sich innerhalb eines Zeitintervalls, das kürzer ist als ein oberer Zeitgrenzwert, die Position einer Berührung der Bedienfläche 16A von einer ersten Position P1 mit den Koordinaten x1 und y1 zu einer zweiten Position P2 mit den Koordinaten x2 und y2 und zurück zur ersten Position P1 verändert hat. Dabei ist der obere Zeitgrenzwert in einer Ausgestaltung der Erfindung kleiner oder gleich 1s, insbesondere kleiner oder gleich 0,5s.

Hat sich innerhalb vorgenannten Zeitintervalls, das kürzer ist als ein oberer Zeitgrenzwert, die Position einer Berührung der Bedienfläche 16A von einer ersten Position P1 zu einer zweiten Position P2 und zurück zur ersten Position P1 verändert, so folgt der Abfrage 30 eine Abfrage 31, ob vorgenanntes Zeitintervall kürzer ist als ein unterer Zeitgrenzwert. Dabei ist der untere Zeitgrenzwert in einer Ausgestaltung der Erfindung kleiner oder gleich 0,1s.

Ist vorgenanntes Zeitintervall nicht kürzer als ein unterer Zeitgrenzwert, so folgt der Abfrage 31 optional eine Abfrage 32, ob

$$\Delta do \geq \sqrt{(x1-x2)^2 + (y1-y2)^2} \geq \Delta du$$

wobei $\Delta do$ z.B. ein Wert zwischen 50mm und 20mm und $\Delta du$ z.B. ein Wert zwischen 10mm und 2mm ist. Ist

$$\Delta do \geq \sqrt{(x1-x2)^2 + (y1-y2)^2} \geq \Delta du$$

so folgt der Abfrage 32 ein Schritt 33, in dem weitere oder andere Informationen angezeigt werden.

Der in Fig. 5 in beispielhafter Ausgestaltung dargestellte Ablaufplan berücksichtigt, dass der Touchscreen 16 derart ausgestaltet ist, dass sich eine zweite gleichzeitig erfolgende Berührung der Bedienfläche 16A in dem Signal P als Veränderung der Position einer Berührung der Bedienfläche 16A widerspiegelt. Erfolgt die Berührung der Bedienfläche 16A an einer Position mit den Koordinaten x1 und y1 so liefert der Touchscreen 16 diese Koordinaten als Signal P. Erfolgt eine zweite zusätzliche Berührung der Bedienfläche 16A an einer Position mit den Koordinaten x3 und y3 so liefert der Touchscreen 16 die Koordinaten x2 und y2 als Signal P, wobei gilt:

$$(x_2 - x_1)^2 + (y_2 - y_1)^2 \approx (x_2 - x_3)^2 + (y_2 - y_3)^2$$

und

$$(x_2 - x_1)^2 + (y_2 - y_1)^2 \approx \frac{(x1 - x_3)^2 + (y_1 - y_3)^2}{2}$$

Bei dem in Fig. 5 in beispielhafter Ausgestaltung dargestellten Ablaufplan sind unter Berücksichtigung dieser Implementierung des Touchscreens 16 vorgenannte weitere oder andere Informationen nur dann auf dem Display 17 anzeigbar, wenn die erste Berührung der Bedienfläche 16A vor der zweiten Berührung der Bedienfläche 16A beginnt und die zweite Berührung der Bedienfläche 16A vor der ersten Berührung der Bedienfläche 16A endet. Es kann auch vorgesehen sein, dass eine entsprechende, unter Bezugnahme auf Fig. 5 beschriebene Berührung der Bedienfläche 16A ein Drücken auf die Bedienfläche 16A bezeichnet.

Es kann vorgesehen sein, die Anzeige weiterer oder anderer Informationen haptisch zu bestätigen und/oder eine haptische Rückkopplung zur Bestätigung der Eingabe eines Befehls vorzusehen. Dabei kann vorgesehen sein, dass die Steuerung 20 als. Bestätigung die Anzeige weiterer oder anderer Informationen und/oder als Bestätigung der Eingabe eines Befehls ein mindestens 50ms andauerndes Steuersignal S erzeugt, mittels dessen der Aktor 18 kurzzeitig bewegt wird. Die einzelnen Komponenten der Eingabevorrichtung sind dabei derart dimensioniert, dass der Touchscreen 16 weniger als 1mm ausgelenkt wird. Ein Steuersignal S kann z.B. eine einfache Sprungfunktion für eine Dauer zwischen 50ms und 800ms, insbesondere für eine Dauer zwischen 100ms und 400ms, oder ein Steuersignal zur Erzeugung einer komplexeren Bewegung sein.

In einer von einer Anzahl von Probanden bevorzugten Ausgestaltung ist der Touchscreen 16 zur Bestätigung des mittels des Touchscreens 16 eingegebenen Befehls mit einer abklingenden Schwingung in eine zum Touchscreen 16 parallele Richtung bewegbar. Die abklingende Schwingung weist eine Hüllkurve mit einem exponentiellen Anteil auf. Dabei weist die Hüllkurve z.B. einen Term $t^{a0}$ oder einen Term $b0^t$ auf, wobei a0 und b0 Variablen sind. So kann die Hüllkurve eine Funktion von $a1 + a2 \cdot t^{a3}$ oder $b1 + b2^t$ sein, wobei a1, a2, a3, b1 und b2 Variablen sind. Zudem besitzt die abklingende Schwingung eine Frequenz zwischen 5Hz und 80Hz. Ein besonders geeignetes Steuersignal besitzt eine Frequenz von 38,1Hz und ist nach 210ms abgeklungen, wobei das Abklingen gemäß einem quadratischen Zusammenhang erfolgt.

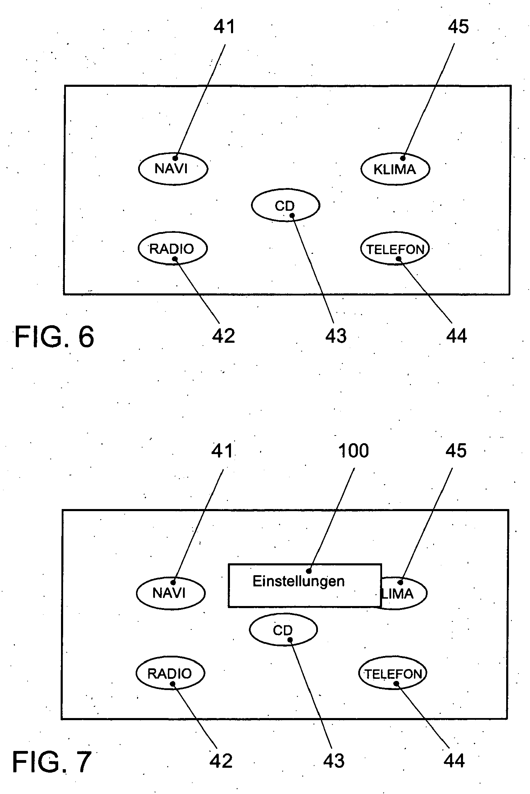

Die entsprechend der Eingabevorrichtung 10 ausgestalteten Eingabevorrichtungen 4 und 8 können in vorteilhafter Ausgestaltung z.B. eine in der WO 00/21795 (incorporated by reference) offenbarte Anzeige- und Bedienungseinrichtung unter Beibehaltung deren menügeführter Funktionalität ersetzen. Fig. 6, Fig. 7, Fig. 8, Fig. 9, Fig. 10, Fig. 11, Fig. 12, Fig. 13, Fig. 14, Fig. 15, Fig. 16, und Fig. 17 zeigen verschiedene Masken, die mittels der Eingabevorrichtung 10 darstellbar sind.

In Fig. 6 ist die Eingabevorrichtung 10 mit einer Grund-Maske dargestellt. Dabei stellt die Eingabevorrichtung 10 fünf durch Ellipsen ausgeführte Bedienelemente 41, 42, 43, 44 und 45 dar. Durch Drücken des Bedienelementes 42 in Fig. 6 wird eine Maske zur Bedienung eines Radios aufgerufen, und durch Drücken des Bedienelementes 43 in Fig. 6 wird eine Maske zur Bedienung eines CD-Spielers aufgerufen. Erfolgt eine erste Berührung der Bedienfläche 16A außerhalb der Bedienelemente 41, 42, 43, 44 und 45 bzw. ein erstes Drücken auf die Bedienfläche 16A in einem Bereich der Bedienfläche 16A außerhalb der Bedienelemente 41, 42, 43, 44 und 45 und eine zweite, die entsprechenden Bedingungen des unter Bezugnahme auf Fig. 5 beschriebenen Ablaufplanes erfüllende Berührung der Bedienfläche 16A bzw. ein zweites, die entsprechenden Bedingungen des unter Bezugnahme auf Fig. 5 beschriebenen Ablaufplanes erfüllendes Drücken auf die Bedienfläche 16A, so wird mittels des Displays 17 ein in Fig. 7 dargestelltes Zusatzmenü 100 angezeigt, dass durch Berühren des Eintrags 'Einstellungen' oder Drücken auf den Eintrag 'Einstellungen' bedient werden kann. Es kann auch vorgesehen sein, dass das Zusatzmenü 100 angezeigt wird, wenn eine erste Berührung der Bedienfläche 16A und eine zweite, die entsprechenden Bedingungen des unter Bezugnahme auf Fig. 5 beschriebenen Ablaufplanes erfüllende Berührung der Bedienfläche 16A erfolgt.

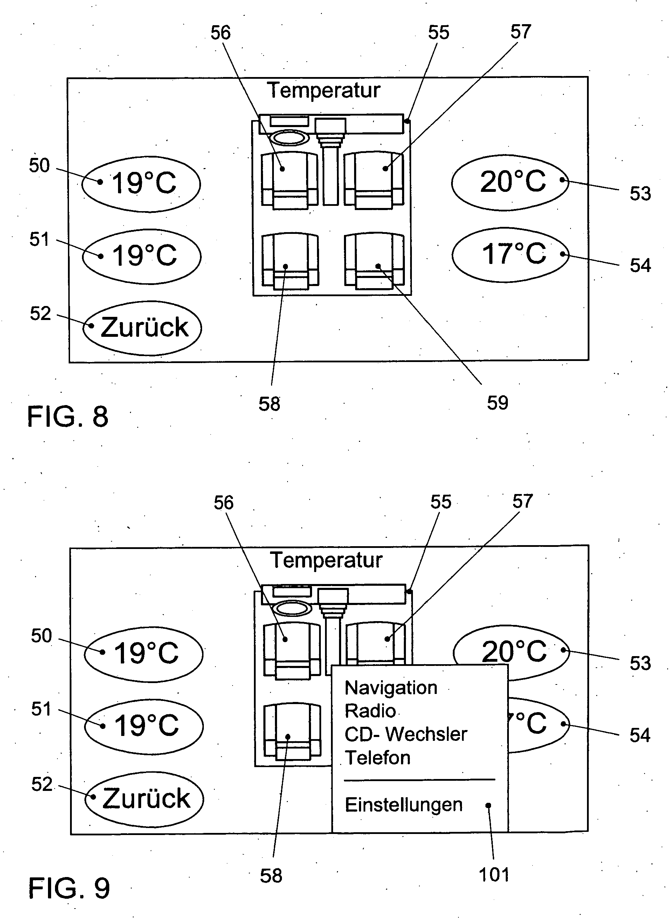

Durch Drücken des Bedienelementes 45 in Fig. 6 bzw. Fig.7 wird eine in Fig. 8 dargestellte Maske zur Bedienung einer Klimaanlage aufgerufen. In der in Fig. 8 dargestellten Maske sind Temperaturangaben der einzelnen Orte im Fahrzeuginnenraum zusammen mit Bedienelementen 50, 51, 52, 53 und 54 dargestellt, wobei die Temperaturangaben sich auf aktuell eingestellte Temperaturen beziehen, die über die Bedienelemente 50, 51, 53 und 54 verändert werden können. Die Darstellung gemäß Fig. 8 mit der Überschrift ‚TEMPERATUR' und der Anzeige eines Innenraumes 55 eines Kraftfahrzeuges macht deutlich, dass die Temperatur im Fahrzeuginneren individuell und sitzplatzbezogen einstellbar ist. Das Bedienelement 50 zeigt für den vorderen Fahrzeugführersitz 56 an, dass eine Temperatur von 19°C eingestellt ist. Das Bedienelement 53 zeigt für den vorderen Beifahrersitz 57 an, dass eine Temperatur von 20°C eingestellt ist. Für die Fondsitze 58 und 59 sind auf der linken Seite 19°C und auf der rechten Seite 17 °C eingestellt. Das Bedienelement 52 hat eine Zuweisung, d. h. eine Funktionszuweisung, die im Displayfeld mit "Zurück" (auf die nächst höhere Menüdarstellung, also im vorliegenden Fall auf die Maske gemäß Fig. 6) dargestellt ist.

Erfolgt eine erste Berührung der Bedienfläche 16A außerhalb der Bedienelemente 50, 51, 53 und 54 bzw. ein erstes Drücken auf die Bedienfläche 16A in einem Bereich der Bedienfläche 16A außerhalb der Bedienelemente 50, 51, 53 und 54 und eine zweite, die entsprechenden Bedingungen des unter Bezugnahme auf Fig. 5 beschriebenen Ablaufplanes erfüllende Berührung der Bedienfläche 16A bzw. ein zweites, die entsprechenden Bedingungen des unter Bezugnahme auf Fig. 5 beschriebenen Ablaufplanes erfüllendes Drücken auf die Bedienfläche 16A, so wird mittels des Displays 17 ein in Fig. 9 dargestelltes Zusatzmenü 101 angezeigt, dass durch Berühren der Einträge 'Navigation', 'Radio', CD-Wechsler', 'Telefon' bzw. 'Einstellungen' oder Drücken auf Einträge 'Navigation', ‚Radio', CD-Wechsler', 'Telefon' bzw. ‚Einstellungen' bedient werden kann. Es kann auch vorgesehen sein, dass das Zusatzmenü 101 angezeigt wird, wenn eine erste Berührung der Bedienfläche 16A und eine zweite, die entsprechenden Bedingungen des unter Bezugnahme auf Fig. 5 beschriebenen Ablaufplanes erfüllende Berührung der Bedienfläche 16A erfolgt.

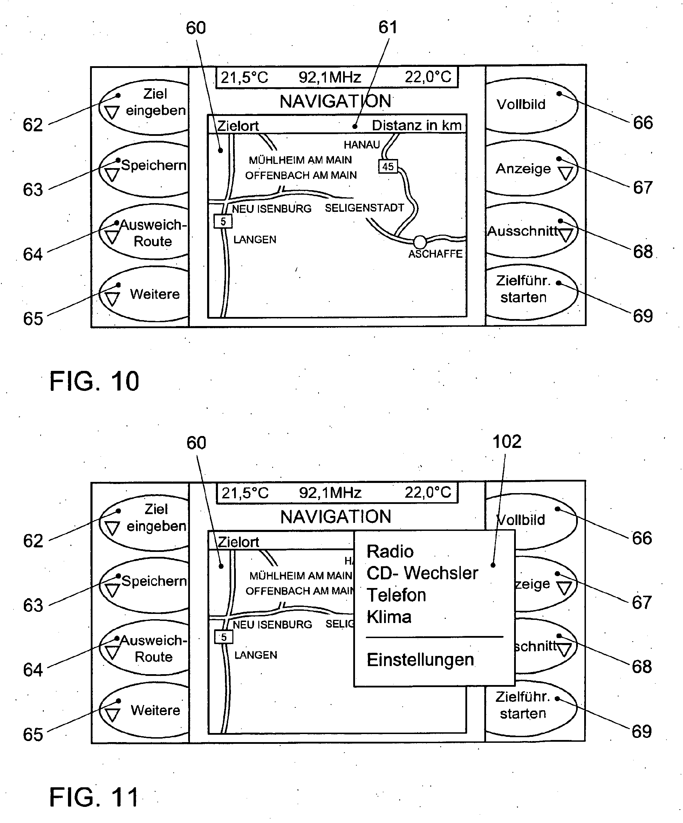

Durch Drücken des Bedienelementes 41 in Fig. 6 wird eine in Fig. 10 dargestellte Maske zur Bedienung eines Navigationssystems aufgerufen. Die Maske zeigt einen Ausschnitt einer Straßenkarte 60 des momentanen Fahrzeugortes sowie oberhalb der Straßenkarte 60 in einem Feld 61 den Zielort und die Entfernung bis zum Zielort. Zudem werden Bedienelemente 62, 63, 64, 65, 67 und 68 dargestellt, mittels derer durch Drücken Untermasken aufgerufen werden können. Es werden außerdem ein Bedienelement 66 zur Darstellung eines Vollbildes und ein Bedienelement 69 zum Starten einer Zielführung dargestellt. In Bezug auf Einzelheiten des unterlegten Menüs sei auf die WO 00/21795 verwiesen, wobei die Bedienelemente 62, 63, 64, 65, 66, 67, 68 und 69 die in der WO 00/21795 offenbarten Bedienelemente 3a, 3b, 3c, 3d, 3e, 3f, 3g und 3h ersetzen.

Erfolgt eine erste Berührung der Bedienfläche 16A außerhalb der Bedienelemente 62, 63, 64, 65, 66, 67, 68 und 69 bzw. ein erstes Drücken auf die Bedienfläche 16A in einem Bereich der Bedienfläche 16A außerhalb der Bedienelemente 62, 63, 64, 65, 66, 67, 68 und 69 und eine zweite, die entsprechenden Bedingungen des unter Bezugnahme auf Fig. 5 beschriebenen Ablaufplanes erfüllende Berührung der Bedienfläche 16A bzw. ein zweites, die entsprechenden Bedingungen des unter Bezugnahme auf Fig. 5 beschriebenen Ablaufplanes erfüllendes Drücken auf die Bedienfläche 16A, so wird mittels des Displays 17 ein in Fig. 11 dargestelltes Zusatzmenü 102 angezeigt, dass durch Berühren der Einträge ‚Radio', ‚CD-Wechsler', ‚Telefon', ‚Klima' bzw. ‚Einstellungen' oder Drücken auf Einträge ‚Radio', ‚CD-Wechsler', ‚Telefon', ‚Klima' bzw. ‚Einstellungen' bedient werden kann. Es kann auch vorgesehen sein, dass das Zusatzmenü 102 angezeigt wird, wenn eine erste Berührung der Bedienfläche 16A und eine zweite, die entsprechenden Bedingungen des unter Bezugnahme auf Fig. 5 beschriebenen Ablaufplanes erfüllende Berührung der Bedienfläche 16A erfolgt.

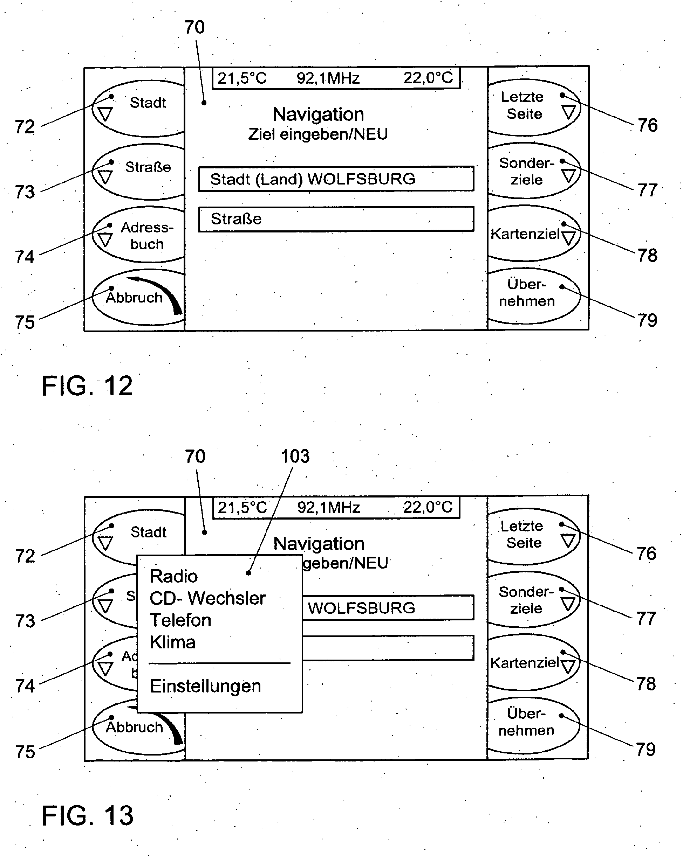

Durch Drücken des Bedienelementes 62 in Fig. 10 bzw. Fig. 11 wird eine Untermaske gemäß Fig. 12 aufgerufen, die in einem Feld 70 das Fahrtziel anzeigt. Mittels der Untermaske gemäß Fig. 12 werden zudem Bedienelemente 72, 73, 74, 75, 76, 77, 78 und 79 dargestellt. In Bezug auf Einzelheiten des unterlegten Menüs sei ebenfalls auf die WO 00/21795 verwiesen, wobei die auf dem Display dargestellten Bedienelemente 72, 73, 74, 75, 76, 77, 78 und 79 die in der WO 00/21795 offenbarten Bedienelemente 3a, 3b, 3c, 3d, 3e, 3f, 3g und 3h ersetzen.

Erfolgt eine erste Berührung der Bedienfläche 16A außerhalb der Bedienelemente 72, 73, 74, 75, 77, 76, 78 und 79 bzw. ein erstes Drücken auf die Bedienfläche 16A in einem Bereich der Bedienfläche 16A außerhalb der Bedienelemente 72, 73, 74, 75, 76, 77, 78 und 79 und eine zweite, die entsprechenden Bedingungen des unter Bezugnahme auf Fig. 5 beschriebenen Ablaufplanes erfüllende Berührung der Bedienfläche 16A bzw. ein zweites, die entsprechenden Bedingungen des unter Bezugnahme auf Fig. 5 beschriebenen Ablaufplanes erfüllendes Drücken auf die Bedienfläche 16A, so wird mittels des Displays 17 ein in Fig. 13 dargestelltes Zusatzmenü 103 angezeigt, dass durch Berühren der Einträge ‚Radio', 'CD-Wechsler', 'Telefon', 'Klima' bzw. ‚Einstellungen' oder Drücken auf Einträge ‚Radio', 'CD-Wechsler', 'Telefon', 'Klima' bzw. 'Einstellungen' bedient werden kann. Es kann auch vorgesehen sein, dass das Zusatzmenü 103 angezeigt wird, wenn eine erste Berührung der Bedienfläche 16A und eine zweite, die entsprechenden Bedingungen des unter Bezugnahme auf Fig. 5 beschriebenen Ablaufplanes erfüllende Berührung der Bedienfläche 16A erfolgt.

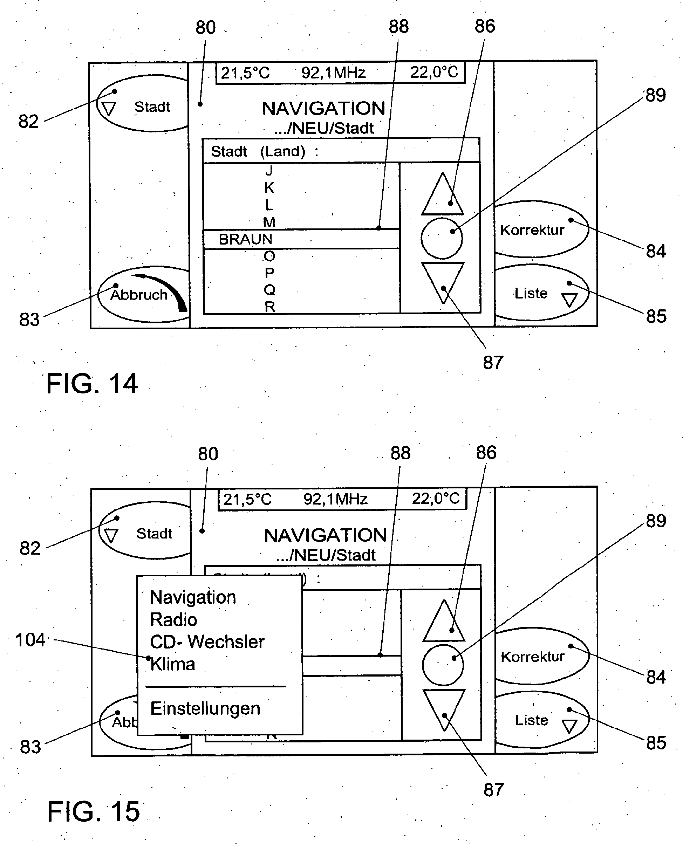

Durch Drücken des Bedienelementes 72 in Fig. 12 bzw. Fig. 13 wird eine Untermaske gemäß Fig. 14 aufgerufen, die in einem Feld 80 einen einzugebenden Zielort anzeigt. Mittels der Untermaske gemäß Fig. 14 werden zudem Bedienelemente 82, 83, 84 und 85 angezeigt, die die in der WO 00/21795 offenbarten Bedienelemente 3a, 3d, 3g und 3h ersetzen. In dem Feld 80 sind eine Buchstabenauswahlzeile 88 sowie Bedienelemente 86, 87 und 89 dargestellt. Die Buchstabenauswahlzeile 88 ist durch Drücken der Bedienelemente 86 bzw. 87 nach oben bzw. nach unten bewegbar. Durch Drücken des Bedienelementes 89 kann ein markierter Buchstabe ausgewählt werden.

Erfolgt eine erste Berührung der Bedienfläche 16A außerhalb der Bedienelemente 82, 83, 84, 85, 87 und 89 bzw. ein erstes Drücken auf die Bedienfläche 16A in einem Bereich der Bedienfläche 16A außerhalb der Bedienelemente 82, 83, 84, 85, 87 und 89 und eine zweite, die entsprechenden Bedingungen des unter Bezugnahme auf Fig. 5 beschriebenen Ablaufplanes erfüllende Berührung der Bedienfläche 16A bzw. ein zweites, die entsprechenden Bedingungen des unter Bezugnahme auf Fig. 5 beschriebenen Ablaufplanes erfüllendes Drücken auf die Bedienfläche 16A, so wird mittels des Displays 17 ein in Fig. 15 dargestelltes Zusatzmenü 104 angezeigt, dass durch Berühren der Einträge , Radio', 'CD-Wechsler', 'Telefon', ‚Klima' bzw. ‚Einstellungen' oder Drücken auf Einträge 'Radio', 'CD-Wechsler', 'Telefon', 'Klima' bzw. 'Einstellungen' bedient werden kann. Es kann auch vorgesehen sein, dass das Zusatzmenü 104 angezeigt wird, wenn eine erste Berührung der Bedienfläche 16A und eine zweite, die entsprechenden Bedingungen des unter Bezugnahme auf Fig. 5 beschriebenen Ablaufplanes erfüllende Berührung der Bedienfläche 16A erfolgt.

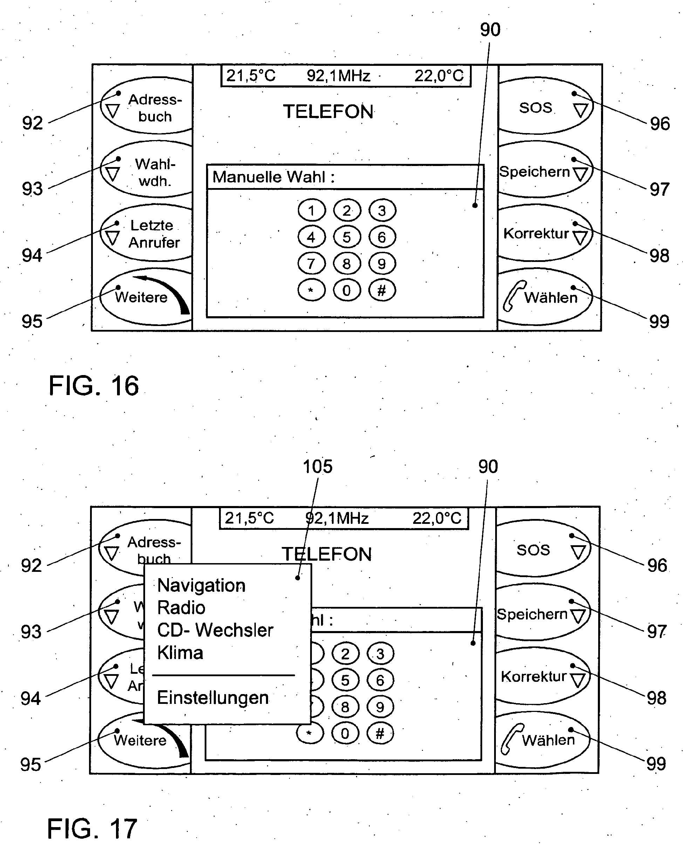

Durch Drücken des Bedienelementes 44 in Fig. 6 bzw. Fig. 7 wird eine in Fig. 16 dargestellte Maske zur Bedienung eines Telefons aufgerufen, die in einem Feld 90 Wahltasten für ein Telefon anzeigt. Mittels der Untermaske gemäß Fig. 16 werden zudem Bedienelemente 92, 93, 94, 95, 96, 97, 98 und 99 angezeigt, die die in der WO 00/21795 offenbarten Bedienelemente 3a, 3b, 3c, 3d, 3e, 3f, 3g und 3h ersetzen. Die im Feld 90 dargestellten Wahltasten für ein Telefon sind als Bedienelemente ausgestaltet, mittels derer eine Telefonnummer wählbar ist.

Erfolgt eine erste Berührung der Bedienfläche 16A außerhalb der Bedienelemente 92, 93, 94, 95, 96, 97, 98 und 99 bzw. ein erstes Drücken auf die Bedienfläche 16A in einem Bereich der Bedienfläche 16A außerhalb der Bedienelemente 92, 93, 94, 96, 95, 97, 98 und 99 und eine zweite, die entsprechenden Bedingungen des unter Bezugnahme auf Fig. 5 beschriebenen Ablaufplanes erfüllende Berührung der Bedienfläche 16A bzw. ein zweites, die entsprechenden Bedingungen des unter Bezugnahme auf Fig. 5 beschriebenen Ablaufplanes erfüllendes Drücken auf die Bedienfläche 16A, so wird mittels des Displays 17 ein in Fig. 17 dargestelltes Zusatzmenü 105 angezeigt, dass durch Berühren der Einträge ‚Navigation', ‚Radio', 'CD-Wechsler', 'Klima' bzw. ‚Einstellungen' oder Drücken auf Einträge 'Navigation', 'Radio', 'CD-Wechsler', ‚Klima' bzw. 'Einstellungen' bedient werden kann. Es kann auch vorgesehen sein, dass das Zusatzmenü 105 angezeigt wird, wenn eine erste Berührung der Bedienfläche 16A und eine zweite, die entsprechenden Bedingungen des unter Bezugnahme auf Fig. 5 beschriebenen Ablaufplanes erfüllende Berührung der Bedienfläche 16A erfolgt.

Es kann vorgesehen sein, dass bei erfolgreicher Bedienung der Bedienelemente 41, 42, 43, 44, 45, 50, 51, 52, 53, 54, 62, 63, 64, 65, 66, 67, 68, 69, 72, 73, 74, 75, 76, 77, 78, 79, 82, 83, 84, 85, 86, 87, 89, 92, 93, 94, 95, 96, 97, 98 und 99 bzw. der Einträge ‚Navigation', 'Radio', 'CD-Wechsler', ‚Telefon', ‚Klima' und ‚Einstellungen' eine haptische Rückkopplung erzeugt wird. Dazu wird der Touchscreen der Eingabevorrichtung 10 entsprechend dann bewegt, wenn durch Drücken des entsprechenden Bedienelementes 41, 42, 43, 44, 45, 50, 51, 52, 53, 54, 62, 63, 64, 65, 66, 67, 68, 69, 72, 73, 74, 75, 76, 77, 78, 79, 82, 83, 84, 85, 86, 87, 89, 92, 93, 94, 95, 96, 97, 98 und 99 bzw. durch Berühren bzw. Drücken der Einträge ‚Navigation', ‚Radio', 'CD-Wechsler', ‚Telefon', 'Klima' und 'Einstellungen' eine Benutzereingabe erfolgt ist. Alternativ kann eine entsprechende haptische Rückkopplung auch bei erfolgreichem Aufruf eines Zusatzmenüs erfolgen. Dies ist für den Einsatz in einem Kraftfahrzeug besonders vorteilhaft, da ein Bediener, also z.B. der Fahrer eines Kraftfahrzeuges, auf diese Weise eine Bestätigung seiner Eingabe erhält, ohne auf die Anzeige schauen zu müssen. Auf diese Weise wird die Sicherheit während einer Fahrt erhöht.

Die Erfindung ist besonders für den Einsatz in einem Kraftfahrzeug geeignet, jedoch nicht auf einen solchen beschränkt. Kraftfahrzeug im Sinne der Erfindung ist insbesondere ein individuell im Straßenverkehr benutzbares Landfahrzeug. Kraftfahrzeuge im Sinne der Erfindung sind insbesondere nicht auf Landfahrzeuge mit Verbrennungsmotor beschränkt.

Obwohl in Verbindung mit einem Touchscreen mit haptischer Rückkopplung beschrieben, ist die Erfindung auch in Verbindung mit einem Touchscreen ohne haptische Rückkopplung einsetzbar.

Die Einträge ‚Navigation', ‚Radio', ‚CD-Wechsler', ‚Telefon', ‚Klima' und ‚Einstellungen' sind Ausführungsbeispiele für weitere oder andere Informationen im Sinne der Ansprüche.

**B E Z U G S Z E I C H E N L I S T E**

| | |
|---|---|
| 1, 5 | Cockpit |
| 2,6 | Lenkrad |
| 3, 7 | Armaturenbrett |
| 4, 8, 10 | Eingabevorrichtung |
| 11,12, 13, 14 | Feder |
| 15 | Rahmen |
| 15A, 15B, 15C, 15D | Verbindungselement |
| 16 | Touchscreen |
| 16A | Bedienfläche |
| 17 | Display |
| 18 | Aktor |
| 18A | Antriebswellenzapfen |
| 19 | Verbindungsstück |
| 19A | Verkrümmung |
| 20 | Steuerung |
| 21 | Referenzkörper |
| 25, 27 | Federarm |
| 26 | Verbindungspunkt |
| 28 | Öffnung |
| 29A, 29B, 29C, 29D | Halterung |
| 30, 31, 32 | Abfrage |
| 33 | Schritt |
| 41, 42, 43, 44, 45, 50, 51, 52, 53, 54, 62, 63, 64, 65, 66, 67, 68, 69, 72, 73, 74, 75, 76, 77, 78, 79, 82, 83, 84, 85, 86, 87, 89, 92, 93, 94, 95, 96, 97, 98, 99 | Bedienelemente |
| 55 | Innenraum |
| 56 | Fahrzeugführersitz |
| 57 | Beifahrersitz |
| 58, 59 | Fondsitz |
| 60 | Straßenkarte |
| 61, 70, 80, 90 | Feld |
| 88 | Buchstabenauswahlzeile |
| 100, 101, 102, 103,104 | Zusatzmenü |
| A, P | Signal |
| D | Dicke |
| HR | Hauptrichtung |
| NR | Nebenrichtung |
| S | Steuersignal |

**Patentansprüche**

1.  Eingabevorrichtung (4,8,10) mit einem Display (17) zur optischen Darstellung von Informationen und einem über dem Display (17) angeordneten Touchscreen (16) zur Eingabe von Befehlen durch Berühren einer Bedienfläche des Touchscreens (16)
    **dadurch gekennzeichnet, dass**
    eine Steuerung zur optischen Darstellung von weiteren oder anderen Informationen auf dem Display (17) bei zumindest einer zweiten gleichzeitig erfolgenden Berührung der Bedienfläche (16A) vorgesehen ist.

2.  Eingabevorrichtung (4,8,10) nach Anspruch 1, **dadurch gekennzeichnet, dass** die weiteren oder anderen Informationen mittels der Steuerung dann auf dem Display (17) anzeigbar sind, wenn die erste Berührung der Bedienfläche (16A) vor der zweiten Berührung der Bedienfläche (16A) beginnt.

3.  Eingabevorrichtung (4,8,10) nach Anspruch 1 oder 2, **dadurch gekennzeichnet; dass** die weiteren oder anderen Informationen mittels der Steuerung dann auf dem Display (17) anzeigbar sind, wenn die zweite Berührung der Bedienfläche (16A) vor der ersten Berührung der Bedienfläche (16A) endet.

4.  Eingabevorrichtung (4,8,10) nach einem der Ansprüche 1 bis 3, **dadurch gekennzeichnet, dass** die weiteren oder anderen Informationen mittels der Steuerung dann auf dem Display (17) anzeigbar sind, wenn die zweite gleichzeitig erfolgende Berührung der Bedienfläche (16A) weniger als einen oberen Zeitgrenzwert dauert.

5.  Eingabevorrichtung (4,8,10) nach Anspruch 4, **dadurch gekennzeichnet, dass** der obere Zeitgrenzwert kleiner oder gleich 1s, vorzugsweise kleiner oder gleich 0,5 s, ist.

6.  Eingabevorrichtung (4,8,10) nach einem der Ansprüche 1 bis 5, **dadurch gekennzeichnet, dass** die Eingabevorrichtung (4,8,10) weiterhin einen Aktor (18) zum Bewegen des Touchscreens aufweist, wobei der Aktor (18) mittels der Steuerung derart ansteuerbar ist, dass der Touchscreen zur Bestätigung einer Anzeige besagter weiterer oder anderer Informationen bewegt wird.

FIG. 1

FIG. 2

FIG. 3

EP 1 677 180 A1

FIG. 4

FIG. 5

41     45

NAVI     KLIMA

CD

RADIO     TELEFON

FIG. 6     42     43     44

41     100     45

NAVI     Einstellungen     LIMA

CD

RADIO     TELEFON

FIG. 7     42     43     44

56    55    57

Temperatur

50    •19°C    20°C    53

51    •19°C    17°C    54

52    Zurück

58    59

**FIG. 8**

56    55    57

Temperatur

50    19°C    20°C    53

51    •19°C

Navigation
Radio
CD- Wechsler
Telefon

Einstellungen    54    °C

52    Zurück

58    101

**FIG. 9**

## FIG. 10

21,5°C    92,1MHz    22,0°C

**NAVIGATION**

62 — Ziel eingeben

63 — Speichern

64 — Ausweich-Route

65 — Weitere

Zielort                Distanz in km

HANAU
MÜHLHEIM AM MAIN          45
OFFENBACH AM MAIN
NEU ISENBURG   SELIGENSTADT
5
LANGEN                    ASCHAFFE

66 — Vollbild

67 — Anzeige

68 — Ausschnitt

69 — Zielführ. starten

60        61

## FIG. 11

21,5°C    92,1MHz    22,0°C

**NAVIGATION**

62 — Ziel eingeben

63 — Speichern

64 — Ausweich-Route

65 — Weitere

Zielort

MÜHLHEIM AM MAIN
OFFENBACH AM MAIN
NEU ISENBURG   SELIG
5
LANGEN

Radio
CD- Wechsler
Telefon
Klima

Einstellungen

Vollbild — 66

zeige — 67

schnitt — 68

Zielführ. starten — 69

60        102

70

21,5°C    92,1MHz    22,0°C

Navigation
Ziel eingeben/NEU

Stadt

72

Straße

73

Adress-
buch

74

Abbruch

75

Stadt (Land) WOLFSBURG

Straße

Letzte
Seite

76

Sonderziele

77

Kartenziel

78

Übernehmen

79

FIG. 12

70          103

21,5°C    92,1MHz    22,0°C

Navigation
geben/NEU

Stadt

72

S

73

A
b

74

Abbruch

75

Radio
CD- Wechsler
Telefon
Klima

Einstellungen

WOLFSBURG

Letzte
Seite

76

Sonderziele

77

Kartenziel

78

Übernehmen

79

FIG. 13

FIG. 14

FIG. 15

90

21,5°C     92,1MHz     22,0°C

TELEFON

Adress-buch

92

Wahl-wdh.

93

Letzte Anrufer

94

Weitere

95

Manuelle Wahl :

(1) (2) (3)
(4) (5) (6)
(7) (8) (9)
(*) (0) (#)

SOS

96

Speichern

97

Korrektur

98

Wählen

99

FIG. 16

105                    90

21,5°C     92,1MHz     22,0°C

TELEFON

Adress-buch

92

W

93

L
A

94

Weitere

95

Navigation
Radio
CD- Wechsler
Klima

Einstellungen

nl :

(2) (3)
(5) (6)
(8) (9)
(*) (0) (#)

SOS

96

Speichern

97

Korrektur

98

Wählen

99

FIG. 17

**Europäisches Patentamt**

**EUROPÄISCHER RECHERCHENBERICHT**

Nummer der Anmeldung

EP 05 02 5836

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 0 773 496 A (INTERNATIONAL BUSINESS MACHINES CORPORATION; INTERNATIONAL BUSINESS MA) 14. Mai 1997 (1997-05-14) | 1-5 | INV. G06F3/038 |
| Y | * Zusammenfassung * <br> * Spalte 3, Zeilen 11-25 * <br> * Spalte 4, Zeile 30 - Spalte 5, Zeile 1 * <br> * Spalte 5, Zeilen 24-37 * <br> * Anspruch 1 * | 6 | |
| X | PATENT ABSTRACTS OF JAPAN <br> Bd. 2000, Nr. 22, <br> 9. März 2001 (2001-03-09) <br> & JP 2001 134382 A (SONY CORP), <br> 18. Mai 2001 (2001-05-18) <br> * Zusammenfassung * | 1-3 | |
| X,P | -& US 6 958 749 B1 (MATSUSHITA NOBUYUKI ET AL) 25. Oktober 2005 (2005-10-25) <br> * Spalte 2, Zeilen 18-28 * <br> * Spalte 3, Zeile 7 - Spalte 4, Zeile 41 * <br> * Spalte 6, Zeile 29 - Spalte 7, Zeile 38 * | 1-3 | |
| X | WO 03/032141 A (SIEMENS AKTIENGESELLSCHAFT; MELZER, ROLAND) 17. April 2003 (2003-04-17) <br> * Zusammenfassung * <br> * Seite 8, Zeilen 9-21 * <br> * Seite 11, Zeile 14 - Seite 12, Zeile 4 * | 1-3 | RECHERCHIERTE SACHGEBIETE (IPC) <br><br> G06F |
| X | US 4 914 624 A (DUNTHORN ET AL) 3. April 1990 (1990-04-03) <br> * Zusammenfassung * <br> * Spalte 4, Zeilen 4-44 * <br> * Spalte 5, Zeilen 1-16 * <br> * Spalte 5, Zeile 62 - Spalte 6, Zeile 4 * <br> * Spalte 6, Zeilen 34-55 * <br> * Spalte 8, Zeilen 5-52 * | 1,2 | |

-/--

Der vorliegende Recherchenbericht wurde für alle Patentansprüche erstellt

| Recherchenort | Abschlußdatum der Recherche | Prüfer |
|---|---|---|
| München | 26. April 2006 | Fournier, N |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

**EP 1 677 180 A1**

Europäisches
Patentamt

# EUROPÄISCHER RECHERCHENBERICHT

Nummer der Anmeldung

EP 05 02 5836

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y,D | WO 03/038800 A (IMMERSION CORPORATION) 8. Mai 2003 (2003-05-08) * Zusammenfassung * * Seite 23, Zeilen 4-17 * ----- | 6 | |
| X | US 2003/095112 A1 (KAWANO SEIICHI ET AL) 22. Mai 2003 (2003-05-22) * Absätze [0035] - [0047] * ----- | 1-4 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| München | 26. April 2006 | Fournier, N |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

 

& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 05 02 5836

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-04-2006

| Im Recherchenbericht angeführtes Patentdokument | | | Datum der Veröffentlichung | Mitglied(er) der Patentfamilie | | | Datum der Veröffentlichung |
|---|---|---|---|---|---|---|---|
| EP 0773496 | A | | 14-05-1997 | DE<br>DE<br>JP<br>US | 69613656<br>69613656<br>9146708<br>5943043 | D1<br>T2<br>A<br>A | 09-08-2001<br>29-05-2002<br>06-06-1997<br>24-08-1999 |
| JP 2001134382 | A | | 18-05-2001 | US | 6958749 | B1 | 25-10-2005 |
| US 6958749 | B1 | | 25-10-2005 | JP | 2001134382 | A | 18-05-2001 |
| WO 03032141 | A | | 17-04-2003 | KEINE | | | |
| US 4914624 | A | | 03-04-1990 | KEINE | | | |
| WO 03038800 | A | | 08-05-2003 | CN<br>EP<br>JP | 1582465<br>1449197<br>2005508058 | A<br>A1<br>T | 16-02-2005<br>25-08-2004<br>24-03-2005 |
| US 2003095112 | A1 | | 22-05-2003 | JP | 2003167669 | A | 13-06-2003 |

EPO FORM P0461

Für nähere Einzelheiten zu diesem Anhang : siehe Amtsblatt des Europäischen Patentamts, Nr.12/82